# EUROPEAN PATENT SPECIFICATION

(11) **EP 0 287 376 B1**
(45) Date of publication and mention of the grant of the patent: **01.09.1993**
(21) Application number: 88303374.8
(22) Date of filing: 14.04.1988
(51) Int. Cl.: G11B 27/30, G11B 20/10, G11B 5/008, H04N 5/92, G11B 20/12

(54) **Recording and/or reproducing information signals**
Aufzeichnung und/oder Wiedergabe von Datensignalen
Enregistrement et/ou reproduction de signaux d'information

(30) Priority: 15.04.1987 JP 92377/87
(43) Date of publication of application: 19.10.1988
(73) Proprietor: SONY CORPORATION, Tokyo 141 (JP)
(72) Inventor: Nakano, Kenji c/o Patents Division, Shinagawa-ku Tokyo 141 (JP); Ogawa, Kazuyuki c/o Patents Division, Shinagawa-ku Tokyo 141 (JP)
(74) Representative: Cotter, Ivan John

(56) References cited:
- EP-A- 0 184 190
- EP-A- 0 209 047
- EP-A- 0 209 151
- US-A- 4 542 419
- PATENT ABSTRACTS OF JAPAN vol. 11, no. 264 (P-610) 27 August 1987;& JP-A-62 067786

## Description

This invention relates to apparatus for recording and/or reproducing information signals. More particularly, but not exclusively, the invention relates to helical-scan type apparatus for recording and/or reproducing information signals, such as a video signal and a pulse-code modulated (PCM) audio signal, on slanting tracks on a recording medium (e.g. a recording tape) by means of a rotary head.

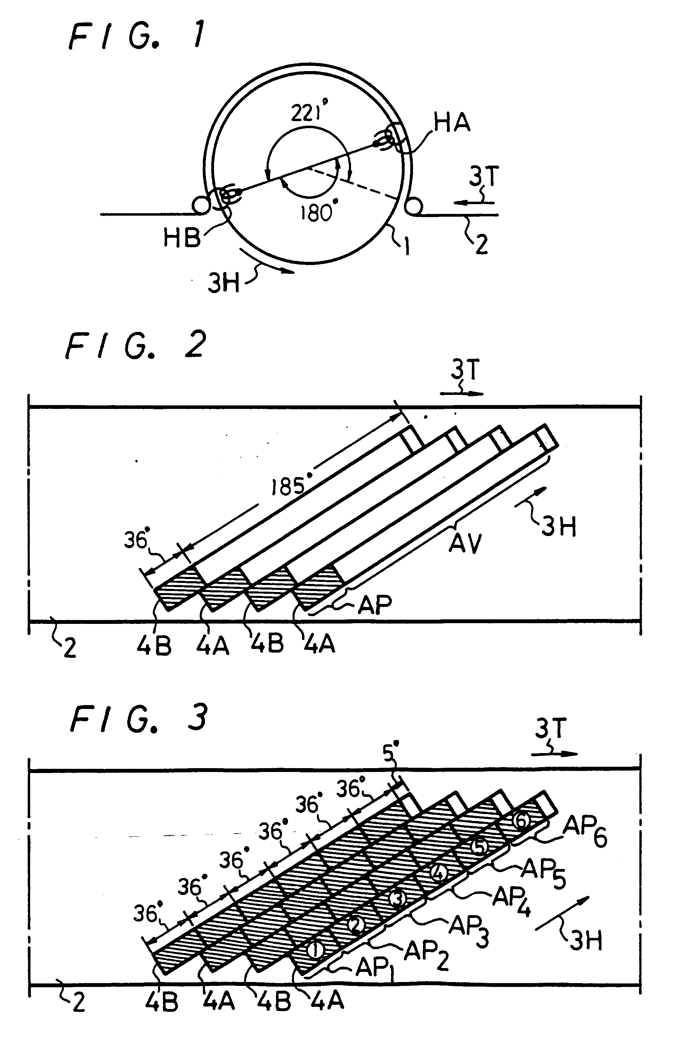

Figure 1 of the accompanying drawings shows a rotary head assembly of a previously proposed 8mm video tape recorder (VTR). The assembly includes recording and reproducing rotary magnetic heads HA and HB. The heads HA and HB have gaps with different azimuth angles and are mounted on a rotary drum 1 with an angular spacing of 180° between them. The heads HA and HB are rotated at a rotational speed equal to a standard frame frequency (e.g. 30 Hz) in the direction indicated by an arrow 3H and protrude slightly from the peripheral surface of the drum 1. A magnetic tape 2 is wrapped around the peripheral surface of the drum 1 over an angular extent of 221° and is suitably transported at a constant speed in the direction indicated by an arrow 3T during recording and normal reproducing operations.

Accordingly, slanting or skewed tracks 4A and 4B, each having a length corresponding to an angular extent of 221° on the surface of drum 1, are alternately formed on the tape 2 by the heads HA and HB, respectively, as shown in Figure 2 of the accompanying drawings. In a normal PCM mode of the 8mm VTR, a so-called overscan area AP of each track, corresponding to an angular extent of 36° measured from a point at which the head HA or HB starts scanning the track 4A or 4B, has recorded therein an audio signal which corresponds to one field period of the video signal and which has been pulse-code modulated and time compressed. Within a succeeding main recording area AV of each track, which has a length corresponding to an angular extent of 180°, a colour video signal of one field period is recorded. The remaining or concluding area of each track, which corresponds to an angular extent of 5°, is assigned as a spare or trace ending area at which the head is disengaged from the track.

Further, the PCM audio signal can be recorded and reproduced by the 8mm VTR in a so-called "multi-PCM" or "audio-use" mode in which, as disclosed in detail in our US Patent No. US-A-4 542 419, the main recording area AV of each track is also used for recording PCM audio signals. In such audio-use or multi-PCM mode, the 8mm VTR becomes exclusively a PCM audio signal recording and/or reproducing apparatus in which PCM audio signals can be recorded in multiple channels. More specifically, as shown in Figure 3 of the accompanying drawings, in the audio-use or multi-PCM mode the area AV of each track corresponding to the angular range of 180° is divided equally by five and the PCM audio signal is recorded in a selected one of these divided portions during scanning of each track. Therefore, the whole area of each track shown in Figure 2, including the area AP and the area AV, is divided into six track areas AP1 to AP6, each corresponding to an angular range or extent of 36°, and first to sixth track channels are formed by the same numbered segments or track areas AP1 to AP6 of the respective tracks 4A, 4B, 4A, 4B, etc. shown in Figure 3, whereby a suitably time compressed PCM audio signal can be recorded in any desired channel. For example, the PCM audio signal may be recorded first in the segments or track areas AP1 of the successive tracks 4A, 4B from one end of the tape to the other. Thereafter, the PCM audio signal may be further recorded in segments or track areas AP2 of the successive tracks from one end of the tape to the other. Accordingly, PCM audio signals can be recorded in and reproduced from each of the six channels with the result that, in the audio-use or multi-PCM mode shown in Figure 3, the tape 2 has an audio recording time or capacity six times as long as when a PCM audio signal is recorded only in the overscan area AP of each track, as in Figure 2.

In each case of the multi-PCM mode, the PCM signal processing circuit used for each of the multiple channels may be the same signal processing circuit provided for processing the PCM audio signal recorded in the single channel constituted by the track areas AP in the 8mm VTR.

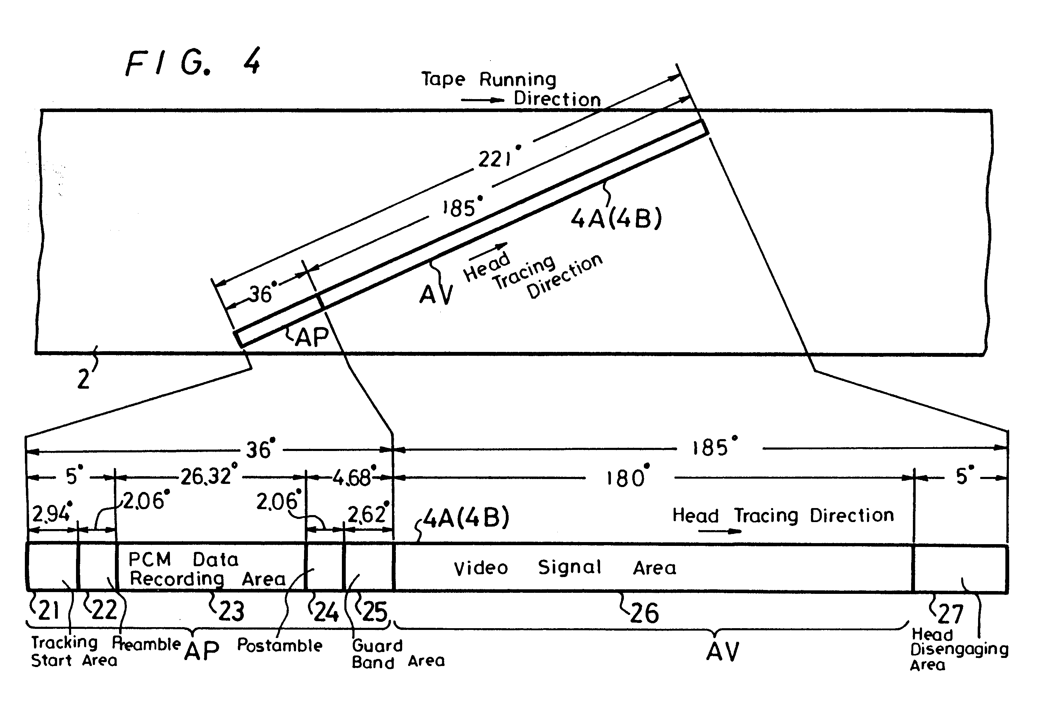

The track format of the above-described 8mm VTR in its normal PCM mode will now be described more fully with reference to Figure 4 of the accompanying drawings, in which contact of a rotary head with the tape 2, that is the starting point of a track, begins at the left hand side where there is provided a contact starting area which has a length corresponding to a head rotation angle of 5° and comprises a tracking start area 21 having an angular extent of 2.94° and an area 22 having an angular extent of 2.06° corresponding to three horizontal periods (3H) of the video signal and assigned as a preamble area for use as a clock run-in area synchronised with the succeeding PCM data. Following the preamble or clock run-in area 22, there is provided a PCM data recording area 23 having an angular extent of 26.32° and in which a time compressed PCM audio signal is recorded. A postamble area 24, also having an angular extent of 2.06° (3H), follows the PCM data recording area 23 so as to be used as a back margin area to cope with displacement of the recording position when recording is carried out in a so-called after-recording mode. A succeeding area 25 having an angular extent of 2.62° is assigned as a guard band area for separating a video signal recording area 26 which follows the PCM data area 23, and which has an angular range or extent of 180° (as earlier noted), for receiving a recorded colour video signal of one field period. Following the area 26, there is provided a head disengaging area 27, having the angular extent of 5°, in which the rotary head is disengaged or separated freely from the magnetic tape.

The PCM data recorded in each recording area 23 is formed by interleaving audio data of one field period and index data associated with the audio data and encoding the same. The index data is formed by coding various items of identifying information, such as the recording date, absolute address, programme number and a so-called time code. Such index data is useful for locating a starting point of a recorded event or programme for reproduction or editing.

However, if the index data is interleaved with the audio data and encoded in a mixed state, as described above, the index data cannot be extracted without de-interleaving the PCM data and then decoding the same. Thus, when the index data is used in a programme search or editing operation, it takes considerable time to process the index data.

Further, in a search operation, the magnetic tape 2 moves at high speed, for example 30 times the standard tape speed in the recording mode, so that the rotary head traces obliquely across the recording area 23. As a result, it is difficult correctly to reproduce the index data recorded therein with the audio data.

To solve the foregoing problems, it has been proposed, for example as disclosed in our European Patent Application Publication No. EP-A-0 209 151, to provide coded index data which is similar to the index data recorded with the PCM audio data in each recording area 23 and which is recorded in the postamble area 24 following the area 23.

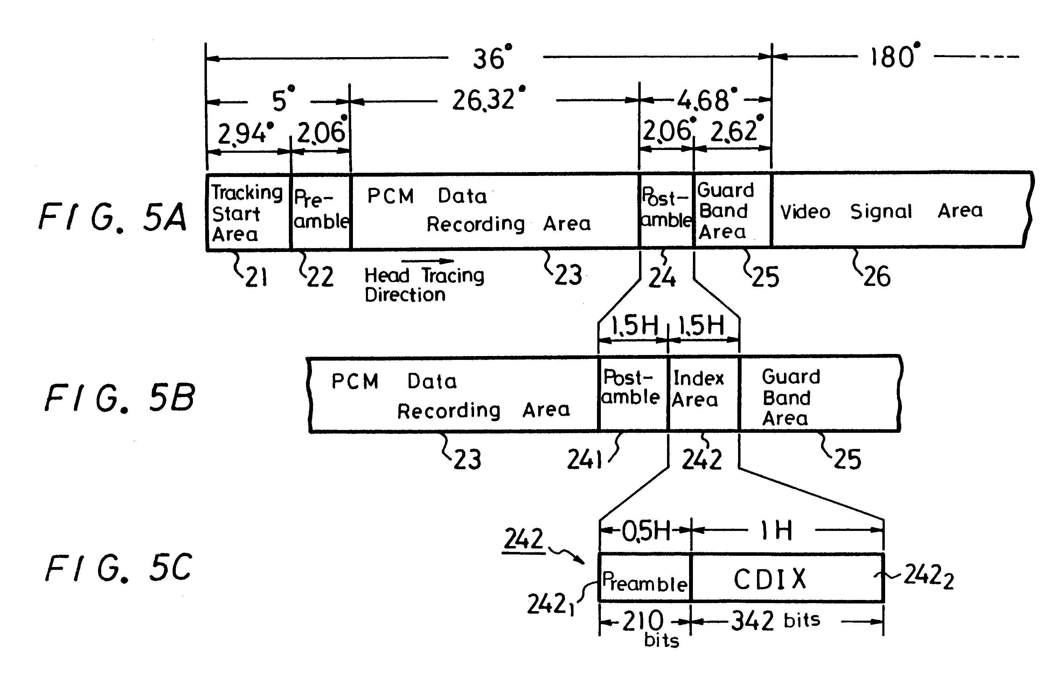

Recording of index data in the postamble area 24 will now be further explained with reference to Figures 5A to 5F of the accompanying drawings, which illustrate a desired recording format with increasing detail. As shown in Figures 5A and 5B, the postamble area 24, having a length of three horizontal periods (3H), is further divided or segmented into a first half-area 241 of 1.5H and a second half-area 242 of 1.5H. The half-area 241 is used to record a postamble signal for the PCM data and the half-area 242 is an index area used to record and/or reproduce the coded index data. As shown in Figure 5C, the index area 242 is still further divided into an initial preamble signal area 242₁ of 0.5H and a subsequent index data area 242₂ of 1H in which coded index data CDIX is recorded.

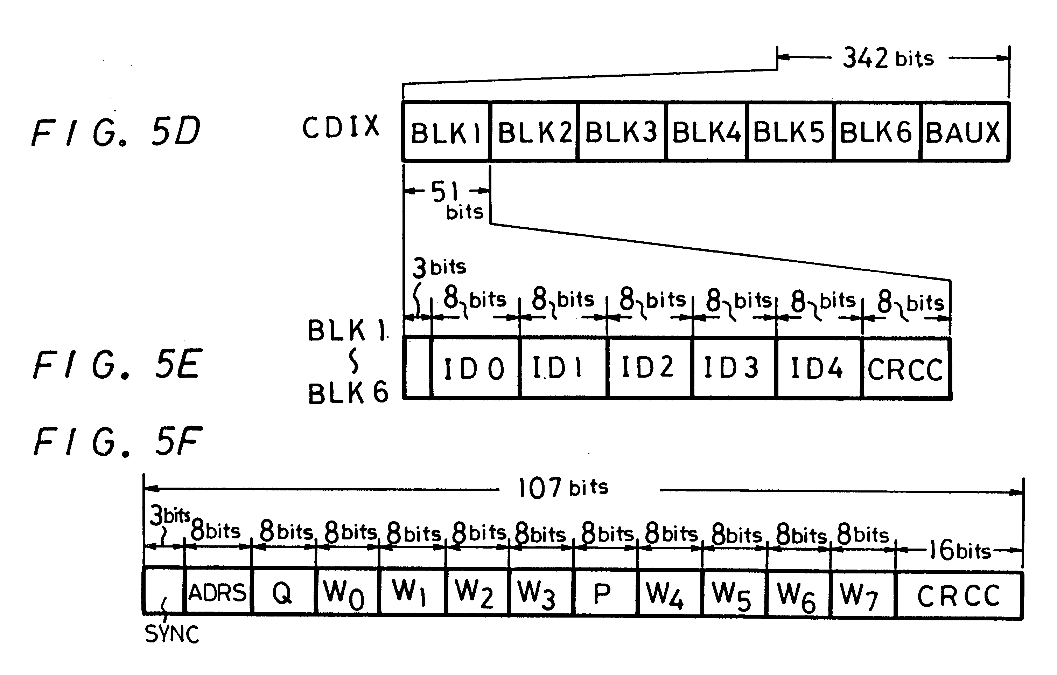

As shown in Figure 5D, the coded index data CDIX is formed of 7 blocks comprising blocks BLK1 to BLK6 (51 bits each) and an auxiliary block BAUX (36 bits). The auxiliary block BAUX is employed, for example, as an end mark. As shown in Figure 5E, each of the blocks BLK1 to BLK6 comprises a block header of 3 bits, ID codes ID0 to ID4 each comprising 8 bits, and a CRC code CRCC of 8 bits. The CRC code is what might be called a cyclic redundancy check code used to detect errors contained in the ID codes.

The ID codes ID0 to ID4 are exactly the same as ID codes ID0 to ID4 recorded with the PCM audio data in the area 23 and indicate data, such as a cut number, recording date and time, absolute position on the magnetic tape 2 or the like.

Generally, the PCM data is recorded in the area 23 on the tape with the binary code data having logic levels "1" or "0" being modulated to signals of respective frequencies. In the 8mm VTR, for example, data having the logic level "1" is modulated to, or represented by, a recorded signal having a frequency of 5.8 MHz, while data having the logic level "0" is modulated to, or represented by, a recorded signal having a frequency of 2.9 MHz.

Similarly, the index data CDIX is converted into a bi-phase signal which is recorded on the magnetic tape 2, and which has a frequency of 2.9 MHz for logic level "0" and 5.8 MHz for logic level "1".

If the index data CDIX is recorded in the index area 242 independently of the PCM data area 23 as mentioned hereinabove, it is possible immediately to obtain the index data by tracing the postamble area 24 in the reproducing mode. Even in the search mode, with a tape speed 30 times as high as that in the recording mode, the index area 242 is short, that is it corresponds to only 1.5H, so that the rotary head can positively reproduce the index data CDIX recorded therein. Further, since the index data CDIX is recorded in the index area 242, which is provided independently of the PCM data area 23 and separated therefrom by the postamble area 241, the index data can be independently and easily recorded in the index area 242 within the postamble area 24 of the recorded track in the after-recording mode, that is a mode in which the index data is recorded after recording of the PCM data.

If the index signal is merely to represent a relative position on the tape, that is if the index signal is merely indicative of the starting point of a tune, event, programme or the like but does not absolutely locate such starting point, it is only necessary that the index signal be discriminated from the video signal and the PCM audio data which make up the information signal recorded on the tape. Thus, for example, if a postamble signal recorded in the postamble area 24 is a single tone signal having a frequency of 5.8 MHz and thus corresponding to PCM data of all "1"s, an index signal which can be readily discriminated from this postamble signal and which has a very small probability of appearing as PCM audio data can be a single tone signal having a frequency of 2.9 MHz and which corresponds to data consisting of consecutive "0"s only. In such a so-called "0" index system, the index signal generator can be simplified and provided at low cost so that it can be used in a relatively inexpensive version of a recording and/or reproducing apparatus.

However, in the "0" index system, that is where only relative position information is provided, the actual position along the tape can be determined from such relative position information only by counting the number of the index signals as the tape is searched from its head or leading end. However, if a tape cassette is ejected from a video tape recorder and then loaded therein again, and the starting point of a recorded event is searched beginning from a point midway between the ends of the tape, it is impossible to know the count of the first detected index signal measured from the head end of the tape.

Therefore, it is desirable to achieve compatibility between the "0" index system and the coded index system. To achieve such compatibility, it has been proposed, for example as disclosed in our above-cited European Patent Application Publication No. EP-A-0 209 151, to record both coded index data and "0" index data in successive halves, respectively, for example in the areas 241 and 242, of the postamble area 24. Since each of the areas 241 and 242 has a length corresponding to 1.5H, they are adequate for the recording therein of the coded index data and the "0" index data. However, by using the area 241 for recording of the coded index data, the postamble area recorded with "1"s is omitted between the recorded PCM audio data in the area 23 and the coded index data of similar format in the area 241, with the result that the end of the PCM audio data in the area 23 may not be readily discriminated. In order to permit retention of the postamble area 241 recorded with successive "1"s, consideration may be given to the use, as a "0" index area, of the preamble area 242₁ (0.5H) constituting the initial part of the index area 242 (Figure 5C). In other words, the preamble area 242₁, which is generally recorded with logic "1", is rewritten as logic "0". However, the preamble area 242₁ of 0.5H is represented as 210 bits at the most.

With regard to the foregoing, it should be noted that, in the "0" index system, consecutive data "0"s of more than a predetermined number have to be written so as to be surely discriminated from the information signal data. For example, a detecting circuit at the reproducing side may have to detect consecutive "0"s of more than 256 bits in order surely to identify the starting point of a recorded event or programme. In that case, if consecutive "0"s of no more than 210 bits are written in the preamble area 242₁, they cannot be surely detected as the "0" index.

According to one aspect of the invention there is provided apparatus for recording an information signal in limited parts of successive slanting tracks on a recording medium by means of a rotary head, each track having an index area apart from said limited part for recording of the information signal, the apparatus comprising: means for processing an information signal in a digital form; means for supplying the processed information signal to the rotary head for recording in said limited parts of the slanting tracks; means for generating coded index data which is formed of a plurality of blocks; characterized by: means for generating an index signal having a plural number of bits for searching for beginnings of groups of the slanting tracks; means for generating a preamble signal having a plural number of bits whose values are different from those of said index signal; and control means for supplying said preamble signal and said coded index data to the rotary head for recording thereof sequentially by the rotary head in said index area of a slanting track and for reducing the number of blocks of said coded index data and recording said index signal in place of said preamble signal as a marker of said beginnings of groups of the slanting tracks to establish compatibility.

According to another aspect of the invention there is provided apparatus for recording and/or reproducing information signals in successive slanting tracks on a recording tape, the apparatus comprising: information signal processing means for converting input information signals to a digitised form in which the information data for a predetermined length of time is grouped as a plurality of data blocks; rotary head means connected to the information signal processing means for recording and/or reproducing the grouped data blocks containing a digitised information signal for said predetermined length of time in a first part of a respective slanting track on the tape; means for generating coded index data formed of a plurality of blocks characterized by; means operative selectively for generating consecutive first logic values as a postamble signal and as a preamble signal for said coded index data, and for generating consecutive second logic values of at least a predetermined bit length as an index signal identifying the start of a respective group of the slanting tracks; means responsive to rotation of the rotary head means for providing an index area signal in correspondence to the scanning by the rotary head means of an index area of a respective slanting track which is spaced from said first part of the respective track by an intervening postamble area; and control means responsive to said index area signal and having a first state in which said consecutive first logic values are supplied to the rotary head means for recording as a postamble signal in said postamble area and in a contiguous portion of said index area as a preamble signal and then a plurality of said blocks of the coded index data is supplied to the rotary head means for recording in a remainder of said index area, the control means further having a second state in which said consecutive second logic values of at least said predetermined bit length are supplied to the rotary head means for recording in said index area as said index signal in place of said preamble signal and followed by a reduced number of at least one said block of the coded index data recorded in said remainder of the index area.

An embodiment of the invention provides information recording and/or reproducing apparatus comprising a rotary head for recording an information signal of a predetermined period in only a part of a slanting track scanned by the head on a recording tape, means for generating coded index data formed of a plurality of data blocks and identifying a respective recorded information signal,means for generating an index signal having a predetermined number of bits representing consecutive logic values which are the same for identifying the beginning of an event or programme defined by the information signals recorded in a number of the slanting tracks, and control means for supplying said index signal and at least one of said blocks of the coded index data to the rotary head for recording by the head in an index area of a slanting track which is separated, by a postamble area, from the part of the slanting track in which the information signal is recorded.

A preferred embodiment of the invention described in detail herein below provides an information recording and/or reproducing apparatus which can satisfactorily establish compatibility between "0" index and coded index systems. The preferred arrangement can be applied to an 8mm VTR and to a PCM audio signal recording and/or reproducing apparatus.

The invention will now be further described, by way of illustrative and non-limiting example, with reference to the accompanying drawings, in which the same references are used to designate like elements and parts throughout, and in which:
Figure 1 is a schematic diagram showing a previously proposed rotary head assembly of a recording and/or reproducing apparatus to which the invention advantageously may be applied;
Figures 2 and 3 are schematic diagrams showing recording track patterns formed by the rotary head assembly of Figure 1 in different recording modes thereof;
Figure 4 is a schematic diagram showing a track format used in the recording mode of Figure 2;
Figure 5A to 5F are schematic representations of formats used for recording a PCM audio signal and coded index data in respective parts of a slanting track;
Figures 6A to 6E are schematic representations of formats used in embodiments of the invention for recording an index signal of a "0" index system type and coded index data in an index area on a slanting track apart from an area in which an information signal is recorded; and
Figure 7 is a schematic block diagram showing an apparatus for recording and/or reproducing an information signal according to an embodiment of the invention.

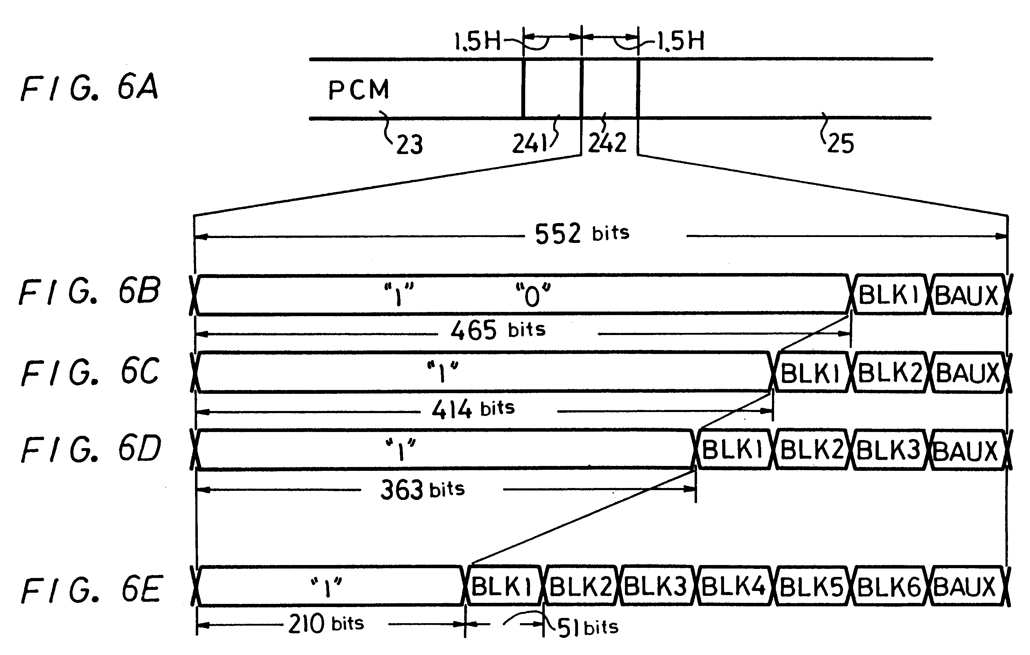

Referring to Figures 6A to 6E in detail, it will be seen that Figure 6A is similar to Figure 5B in that it particularly shows the postamble area 241 and the index area 242 (each of 1.5H) arranged in sequence between the PCM data recording area 23 and the guard band area 25. In accordance with an embodiment of the present invention which is applied, by way of example, to the previously described 8mm VTR, the area 241 is retained as a postamble area following the area 23 in which PCM audio data is recorded, and the number of coded index data blocks BLK1 to BLK6 recorded in the index area 242 is varied between one block BLK1 (Figure 6B) and six blocks BLK1 to BLK6 (Figure 6E). By reason of such variable number of coded index data blocks recorded in the index area 242, which has a total length of 552 bits, that is 210 bits for the preamble area 242₁ and 342 bits for the index data area 242₂, as shown in Figure 5C, even if five coded index data blocks are recorded in the index area 242 the remaining length of the index area 242 corresponds to 261 bits. Such remaining length of 261 bits corresponds to the 210 bit length of the preamble area 242₁ and the 51 bit length of the single omitted coded index data block. This area having a length of 261 bits exceeds the threshold value of 256 consecutive "0"s needed to detect the "0" index. Thus, if the area having a length of 261 bits is utilised as the "0" index area, it becomes possible to establish compatibility between the "0" index and the coded index even though as many as five coded index data blocks are recorded in the index area 242.

It is possible that the starting point of a recorded event or programme will not be reliably detected on the basis of the "0" index if the bit length of the area provided within the index area 242 to receive the "0" index is near to the threshold value of 256 bits. In order to avoid such possibility, the bit length of the area within the index area 242 provided to receive the "0" index may be extended further, for example to 465 bits, by recording the coded index data in the single block BLK1, as shown in Figure 6B. In such case, "1"s are normally written as a preamble signal in such "0" index area of 465 bits length and, in the slanting tracks corresponding to the starting point of a recorded event or programme, all of such "1"s are replaced by recorded consecutive "0"s to provide a reliably detected "0" index of 465 bits.

When, as shown in Figure 6C to 6E, two or more blocks of coded index data are written in the index are 242, "1"s are written as a preamble signal in all of the index area 242 not occupied by the coded index data, and these "1"s are replaced by "0"s to form the "0" index at the starting point of each recorded event or programme.

In the case where only a single block BLK1 is recorded as the coded index data in the index area 242, such block can contain a time code comprising hour, minute, second and frame number indications. Such time code may be contained or written only in the block BLK1 recorded in a track by the rotary head HA, while the block BLK1 recorded in a track by the rotary head HB contains other optional codes representing, for example, the date, programme number and the like.

The data format within each of the blocks BLK1 to BLK6 is made the same as that of the ID (identifying) word contained in the PCM audio data.

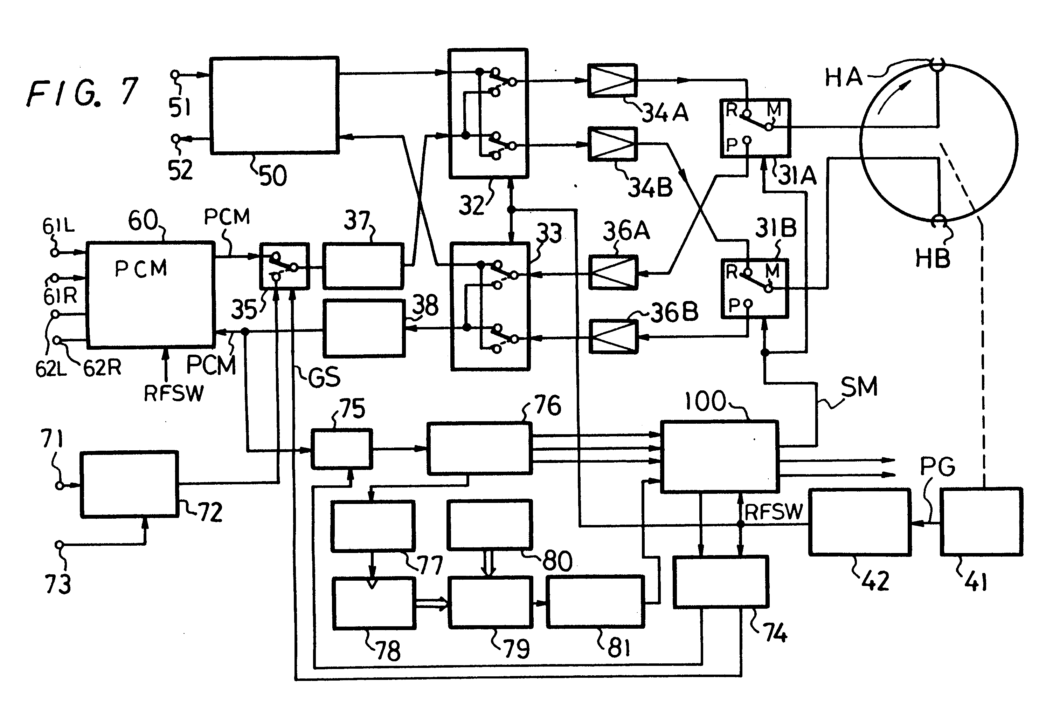

Figure 7 shows apparatus embodying the invention for recording and/or reproducing information signals, the apparatus being associated with an 8mm VTR and including recording and/or reproducing change-over switching circuits 31A and 31B to which a recording or reproducing switching signal SM is applied from a system controller 100 that incorporates a microcomputer. Each of the switching circuits 31A and 31B engages a movable contact M thereof with a recording contact R thereof upon recording and changes over to engage the movable contact M with a playback contact P upon reproducing.

Rotary head change-over switching circuits 32 and 33 are operated by a head switching signal RFSW to be alternately disposed in the positions shown in full lines and in dotted lines, respectively, at every half revolution of the rotary recording/reproducing heads HA and HB.

A pulse signal PG having a frequency of 30 Hz is generated by a pulse generator 41 so as to be indicative of the absolute rotary phase of the rotary heads HA and HB and is supplied to a switching signal generating circuit 42 from which the switching signal RFSW, which is a square wave signal having a duty ratio of 50%, is derived

In a normal PCM recording mode of the apparatus shown in Figure 7, an input video signal Vᵢₙ applied to an input terminal 51 is supplied to a video signal processing circuit 50 in which it is suitably processed. An output video signal from the circuit 50 is then supplied to the switching circuit 32. The switching circuit 32 is alternately switched by the switching signal RFSW at every half revolution of the rotary heads HA and HB, which are controlled by a drum phase servo taking the pulse signal PG as a reference phase, so that, when the head HA scans the area AV of a track 4A, the video signal is supplied through a recording amplifier 34A and the switching circuit 31A to the head HA and is thereby recorded on this area AV of the respective track 4A. In like manner, when the head HB scans the area AV of a track 4B, the video signal is supplied through a recording amplifier 34B and the switching circuit 31B to the head HB and is thereby recorded on the area AV of the respective track 4B.

Left and right channel audio signals applied to input terminals 61L and 61R are both supplied to a PCM audio signal processor 60 and are processed therein to form PCM data.

The PCM data for one slanting track is generally formed so that an information signal, such as an audio signal and the like, having a constant time period, for example corresponding to one field, is divided into a plurality of blocks and a block synchronising signal and a block address signal are added to each of the divided blocks.

In the PCM audio data of the 8mm VTR, the data of one track area AP or AP₁ to AP₆ is formed of 132 blocks and, as shown in Figure 5F, each block is formed of a block synchronising signal SYNC of 3 bits, a block address word ADRS of 8 bits, error correction parity words P and Q each of 8 bits, audio data words W0 to W7 each of 8 bits, and an error detection CRC (cyclic redundancy check) code of 16 bits. In other words, the audio signal is digitised, the resulting digital signal is divided into 132 blocks for each field period thereof, the parity words P and Q, each of which is an error correction code, are generated, and the CRC code is generated for each block. The switching signal RFSW is supplied from its generating circuit 42 to the PCM audio signal processor 60 which, on the basis of such switching signal, forms a PCM area signal corresponding to the scanning of the PCM data recording area 23 of a slanting track by the head HA or HB. In the recording mode, the PCM audio data for one field is written in a random access memory (RAM) - not shown - contained in the processor 60, and such PCM audio data is read from the RAM during the period of time specified by the PCM area signal. Thus, PCM audio data of one field period is time-base-compressed, as read out, to about one-fifth of the original duration. The thus read out PCM audio data is supplied to a first input of a switching circuit 35 which, in the state shown by full lines on Figure 7, passes the PCM audio data to a modulating circuit (modulator) 37 in which data of the logic value "1" is converted into a signal of 5.8 MHz and data of the logic value "0" is converted into a signal of 2.9 MHz. The resulting modulated signal is supplied to the switching circuit 32 in which, in response to changing-over of the switching circuit 32 by the switching signal RFSW, the modulated PCM audio signal is selectively supplied to the rotary heads HA and HB.

Thus, the modulated PCM audio signals are recorded in the PCM data recording area 23 of the overscan area AP of each track 4A by the head 4A, and in the PCM data recording area 23 of the overscan area AP of each track 4B by the head HB.

Following the recording of a modulated PCM audio signal in a respective recording area 23, at least one block BLK1 of coded index data is recorded in the subsequently scanned index area 242, with the remainder of such index area 242 having recorded therein data representing successive "1"s or "0"s as a preamble or as a "0" index, respectively, as shown in any one of Figures 6B to 6E. In order to provide the foregoing data for recording in the index area 242, index information, such as the recording date, absolute address, time information and the like, is supplied through an input terminal 71 to an index encoder 72. A "0" index specifying signal is also supplied through an input terminal 73 to the index encoder 72, for example in response to actuation of a programme search index switch (not shown). When the programme search index switch is actuated, the index encoder 72 responds to the reception of the "0" index specifying signal at its terminal 73 by producing data formed of consecutive "0"s only followed by, for example, one block BLK1 of coded index data (Figure 6B) corresponding to the index information received at the terminal 71, during an index interval corresponding to the scanning of a predetermined number of tracks after the search index switch is actuated. If, on the other hand, the programme index switch is not actuated or is in its off state, the index encoder 72 produces, during the index interval, as many as six coded index data blocks BLK1 to BLK6 corresponding to the index information supplied thereto from the input terminal 71 and being preceded by as many consecutive data "1"s as will fit in the index area 242 to serve as a preamble.

The above-described output signal from the index encoder 72 is supplied to a second input of the switching circuit 35 to be passed through the latter to the modulating circuit 37 when the switching circuit 35 is changed-over to the state indicated by broken lines in Figure 7. In order to effect the controlled change-over of the switching circuit 35, the switching signal RFSW from the switching signal generating circuit 42 is supplied to a gating signal generating circuit 74 which also receives a respective control signal from the system controller 100. In response to the signal RFSW and the control signal from the controller 100, the circuit 74 provides a switching signal GS which normally has the value "0" and is changed over to the value "1" only during each period corresponding to the scanning of the postamble area 24 of a slanting track by the head HA or HB. The switching signal GS is supplied to the switching circuit 35 so that the latter is changed-over to the state shown by broken lines in response to the "1" value of the signal GS. Thus, in the first half 241 of the postamble area 24 of the overscan (PCM) area AP, consecutive "1"s are recorded to serve as the postamble signal, and, in the index area 242, the program search "0" index data followed by coded index data CDIX is recorded, or normal successive "1"s forming a postamble followed by only the coded index data CDIX are recorded, depending on whether or not the programme index switch has been actuated.

In a reproducing or playback mode of the apparatus shown in Figure 7, the rotary phase of the rotary drum is again servo-controlled on the basis of the pulse signal PG generated from the pulse generator 41.

As is well known, in the case of the 8mm VTR, tracking pilot signals (not shown) of a so-called 4-frequency system are periodically recorded on each of the tracks 4A and 4B so that, during reproducing, tracking servo is effected with reference to the 4-frequency system tracking pilot signals.

In the playback mode, reproduced signal outputs from the rotary heads HA and HB are supplied through playback amplifiers 36A and 36B, respectively, to the switching circuit 33. The switching circuit 33 is changed-over in response to the switching signal RFSW so that the video signal from the area AV of each track is supplied to the video signal processing circuit 50, while the signal from the area AP of each track is supplied to a demodulating circuit 38, in which the bi-phase signal is reconverted into PCM data of "0" or "1". This PCM data is supplied to the PCM audio signal processor 60.

In the video signal processing circuit 50, the video signal is demodulated and then delivered to an output terminal 52.

In the PCM audio signal processor 60, the reproduced PCM signal is error-detected and error-corrected or the like and then is reconverted into left- and right-channel analog audio signals which are supplied to output terminals 62L and 62R.

The output signal from the demodulating circuit 38 is also supplied to a gate circuit 75. A gating signal is supplied from the gating signal generating circuit 74 to the gate circuit 75 which is thereby opened to derive the index data reproduced from the index area 242. This index data is supplied from the gate circuit 75 to an index decoder 76. The index decoder 76 decodes the coded index data block or blocks and supplies the respective decoded output to the system controller 100. The system controller 100 produces a predetermined control command in response to the received coded index data.

A consecutive "0" judging circuit or detector 77 is provided to receive the data passed by the gate circuit 75 other than the coded index data from the index decoder 76 and to detect consecutive "0"s disposed in advance of the coded index data CDIX in the index area 242. The judging circuit 77 provides a detected output at every bit of the consecutive "0"s data, and such detected output is supplied to a clock terminal of a counter 78. The counter 78 counts the bit number of the data constituting consecutive "0"s. The count output from the counter 78 is supplied to a comparing circuit 79 in which it is compared with a threshold value, for example "256", established by a threshold value generating circuit 80. The comparing circuit 79 provides a compared output to a programme search judging circuit 81 when the count output from the counter 78 exceeds "256" or any other threshold value established by the circuit 80. In response to such compared output from the circuit 79, the programme search judging circuit 81 detects that the tape being played back in the search mode is at the starting point of a recorded programme or event and provides a corresponding output to the system controller 100. The system controller 100 responds to the judged output to produce a control signal by which movement of the tape is halted.

In the manner indicated above, control operations can be effected using the coded index and the "0" index. Further, the described arrangements of the coded index data and the "0" index in the index area 242 of a slanting track ensure that a record tape thus recorded with both types of index signals will be compatible with a playback apparatus in which only the "0" index is decoded. Moreover, the postamble area 241 is retained between the area 23 in which the PCM data is recorded and the index area 242 in which the coded index data having a similar format is recorded so as to ensure the reliable discrimination of both types of data. Further, the area provided within the index area 242 to receive the "0" index data is of sufficient bit length to ensure that the bit length of the recorded "0" index data well exceeds the threshold value established for the reliable detection thereof.

A tracking pilot signal may or may not be recorded in the index signal recording area 242. In general, since the pilot signal is also recorded in the overscan (PCM) area AP, and since the index signal recording area 242 is as short as 1.5H, the omission of the tracking pilot signal from the area 242 will hardly affect the tracking servo operation.

The present invention can also be applied in the so-called "multi-PCM" or "audio-use" mode of the 8mm VTR described above with reference to Figure 3. In that case, each of the track areas AP1 to AP6 includes a PCM recording area 23 and an index area 242 forming part of a postamble area 24, and, as described above, "0" index data and coded index data are both recorded in such index area 242.

It will be appreciated that, in accordance with the embodiment of the invention described above, a recording format is provided in which it is sufficient that the coded index data is recorded at least in one block in the area 242 and the remainder of such index area 242 is utilised as the "0" index data area. Thus, compatibility between the "0" index and the coded index is established, that is a recording tape recorded with both coded index data and "0" index data can be played back in a conventional apparatus employing only the "0" index system.

## Claims

1. Apparatus for recording an information signal in limited parts (23) of successive slanting tracks (4A, 4B) on a recording medium (2) by means of a rotary head (HA, HB), each track (4A, 4B) having an index area (242) apart from said limited part (23) for recording of the information signal, the apparatus comprising:
means (60) for processing an information signal in a digital form;
means (37, 32) for supplying the processed information signal to the rotary head (HA, HB) for recording in said limited parts (23) of the slanting tracks (4A, 4B);
means (72) for generating coded index data which is formed of a plurality of blocks (BLK1 to BLK6);
characterized by:
means (72) for generating an index signal having a plural number of bits for searching for beginnings of groups of the slanting tracks;
means (72) for generating a preamble signal having a plural number of bits whose values are different from those of said index signal; and
control means (41, 42, 100, 74, 35, 37, 32) for supplying said preamble signal and said coded index data to the rotary head (HA, HB) for recording thereof sequentially by the rotary head in said index area (242) of a slanting track (4A, 4B) and for reducing the number of blocks of said coded index data and recording said index signal in place of said preamble signal as a marker of said beginnings of groups of the slanting tracks to establish compatibility.

2. Apparatus according to claim 1, wherein the information signal is an audio signal.

3. Apparatus according to claim 1 or claim 2, wherein the number of blocks (BLK1 to BLK6) of said coded index data is variable.

4. Apparatus according to any one of the preceding claims, wherein said index signal comprises consecutive "0"s and said preamble portion comprises consecutive "1"s.

5. Apparatus according to any one of the preceding claims, comprising means for recording a second information signal in each slanting track (4A, 4B) in a portion (26) of the track which is different from said limited part (23) where the first-mentioned information signal is recorded.

6. Apparatus according to claim 5, wherein the second information signal is a video signal.

7. Apparatus according to claim 5, wherein the second information signal comprises a plurality of channels of audio signals.

8. Apparatus for recording and/or reproducing information signals in successive slanting tracks (4A, 4B) on a recording tape (2), the apparatus comprising:
information signal processing means (60) for converting input information signals to a digitised form in which the information data for a predetermined length of time is grouped as a plurality of data blocks;
rotary head means (HA, HB) connected to the information signal processing means (6) for recording and/or reproducing the grouped data blocks containing a digitised information signal for said predetermined length of time in a first part (23) of a respective slanting track (4A, 4B) on the tape (2);
means (72) for generating coded index data formed of a plurality of blocks (BLK1 to BLK6) characterized by;
means (72) operative selectively for generating consecutive first logic values as a postamble signal and as a preamble signal for said coded index data, and for generating consecutive second logic values of at least a predetermined bit length as an index signal identifying the start of a respective group of the slanting tracks (4A, 4B);
means (41, 42, 100, 74) responsive to rotation of the rotary head means (HA, HB) for providing an index area signal (GS) in correspondence to the scanning by the rotary head means (HA, HB) of an index area (242) of a respective slanting track (4A, 4B) which is spaced from said first part (23) of the respective track by an intervening postamble area (241); and
control means (35) responsive to said index area signal (GS) and having a first state in which said consecutive first logic values are supplied to the rotary head means (HA, HB) for recording as a postamble signal in said postamble area (241) and in a contiguous portion of said index area (242) as a preamble signal and then a plurality of said blocks (BLK1 to BLK6) of the coded index data is supplied to the rotary head means for recording in a remainder of said index area (242), the control means (35) further having a second state in which said consecutive second logic values of at least said predetermined bit length are supplied to the rotary head means for recording in said index area (242) as said index signal in place of said preamble signal and followed by a reduced number of at least one said block of the coded index data recorded in said remainder of the index area (242).

9. Apparatus according to claim 8, wherein the input information signals are audio signals.

10. Apparatus according to claim 8 or claim 9, wherein the number of said blocks (BLK1 to BLK6) forming said coded index data is variable.

11. Apparatus according to claim 8, claim 9 or claim 10, wherein said first logic values are "1"s and said second logic values are "0"s so that said index signal is a "0" index signal of sufficient bit length to be reliably detected.

12. Apparatus according to any one of claims 8 to 11, comprising means for supplying to the rotary head means (HA, HB) second information signals for recording in second parts (26) of the slanting tracks (4A, 4B) which are each apart from said first part (23), postamble area (241) and index area (242) of the respective slanting track.

13. Apparatus according to claim 12, wherein the second information signals are video signals.

14. Apparatus according to claim 13, wherein the second information signals are channels of audio signals.

## Patentansprüche

1. Vorrichtung zum Aufzeichnen eines Informationssignals in begrenzten Teilen (23) von aufeinanderfolgenden Schrägspuren (4A, 4B) auf einem Aufzeichnungsmedium (2) mit Hilfe eines rotierenden Magnetkopfes (HA, HB), wobei jede der Spuren (4A, 4B) außer dem genannten begrenzten Teil (23) zur Aufzeichnung des Informationssignals einen Indexbereich (242) aufweist, mit
Mitteln (60) zum Verarbeiten eines Informationssignals in eine digitale Form,
Mitteln (37,32) zum Zuführen des verarbeiteten Informationssignals zu dem Magnetkopf (HA, HB), um es in dem begrenzten Teil (23) der Schrägspur (4A, 4B) aufzuzeichnen,
und Mitteln (72) zum Erzeugen von aus einer Mehrzahl von Blöcken (BLK1 bis BLK6) gebildeten kodierten Indexdaten,
**gekennzeichnet** durch
Mittel (72) zum Erzeugen eines Indexsignals mit einer Mehrzahl von Bits zum Suchen des Anfangs von Gruppen der genannten Schrägspuren,
Mittel (72) zum Erzeugen eines Präambelsignals mit einer Mehrzahl von Bits, deren Werte von denen des Indexsignals abweichen, und
Steuermittel (41, 42, 100, 74, 35, 37, 32) zum Zuführen des Präambelsignals und der kodierten Indexdaten zu dem rotierenden Magnetkopf (HA, HB), um sie mit Hilfe des rotierenden Magnetkopfes in dem Indexbereich (242) einer Schrägspur (4A, 40) sequentiell aufzuzeichnen und die Anzahl der Blöcke der kodierten Indexdaten zu reduzieren und zur Herstellung von Kompatibilität das Indexsignal anstelle des Präambelsignals als Markierung für die Anfänge von Gruppen von Schrägspuren aufzuzeichnen.

2. Vorrichtung nach Anspruch 1, bei der das Informationssignal ein Audiosignal ist.

3. Vorrichtung nach Anspruch 1 oder 2, bei der die Anzahl von Blöcken (BLK1 bis BLK6) in den kodierten Indexdaten variabel ist.

4. Vorrichtung nach einem der vorhergehenden Ansprüche, bei der das Indexsignal eine Folge von Werten "0" und das Präambelsignal eine Folge von Werten "1" aufweist.

5. Vorrichtung nach einem der vorhergehenden Ansprüche mit Mitteln zum Aufzeichnen eines zweiten Informationssignals in jeder Schrägspur (4A, 4B) in einem Spurbereich (26), der von dem begrenzten Teil (23), in dem das erstgenannte Informationssignal aufgezeichnet wird, abweicht.

6. Vorrichtung nach Anspruch 5, bei der das zweite Informationssignal ein Videosignal ist.

7. Vorrichtung nach Anspruch 5, bei der das zweite Informationssignal mehrere Kanäle von Audiosignalen umfaßt.

8. Vorrichtung zum Aufzeichnen und/oder Wiedergeben eines Informationssignals in bzw. von aufeinanderfolgenden Schrägspuren (4A, 4B) auf einem Aufzeichnungsband (2) mit
einer Informationssignal-Verarbeitungseinrichtung (60) zum Umwandeln von Eingangs-Informationssignalen in eine digitalisierte Form, in der die Informationsdaten für eine vorgegebene Zeitdauer in Form einer Mehrzahl von Datenblöcken gruppiert werden,
eine mit der Informationssignal-Verarbeitungseinrichtung (60) verbundene rotierende Kopfanordnung (HA, HB) zum Aufzeichnen und/oder Wiedergeben der ein digitalisierten Informationssignal der genannten vorgegebenen Zeitdauer enthaltenden gruppierten Datenblöcke in einem ersten Teil (23) einer entsprechenden Schrägspur (4A, 4B) auf dem Band (2),
und Mitteln (72) zur Erzeugung von aus einer Mehrzahl von Blöcken (BLK1 bis BLK6) bestehenden kodierten Indexdaten,
**gekennzeichnet durch**
wahlweise wirksam werdende Mittel (72) zur Erzeugung einer Folge von ersten logischen Werten als Postambelsignal und als Präambelsignal für die kodierten Indexdaten und zur Erzeugung einer zumindest eine vorgegebene Bitlänge aufweisenden Folge von zweiten logischen Werten als Indexsignal, das den Anfang einer jeweiligen Gruppe von Schrägspuren (4A, 4B) identifiziert,
auf die Rotationsbewegung der rotierenden Kopfanordnung (HA, HB) ansprechende Mittel (41, 42, 100, 74) zur Lieferung eines Indexbereichssignals (GS) nach Maßgabe der durch die rotierende Kopfanordnung (HA, HB) erfolgenden Abtastung eines Indexbereichs (242) einer Schrägspur (4A, 4B), der von dem genannten ersten Teil (23) der betreffenden Spur durch einen zwischenliegenden Postambelbereich (241) getrennt ist,
eine auf das Indexbereichssignal (GS) ansprechende Steuereinrichtung (35), die einen
- ersten Zustand annehmen kann, in der Kopfanordnung (HA, HB) die Folge von ersten logischen Werten zugeführt wird zur Aufzeichnung als Postambelsignal in dem genannten Postambelbereich (241) und in einem angrenzenden Abschnitt des Indexbereichs als Präambelsignal, wobei dann eine Mehrzahl der genannten Blöcke ((BLK1 bis BLK6) von kodierten Indexdaten zugeführt wird zur Aufzeichnung in dem verbleibenden Teil des Indexbereichs (242) und weiterhin einen
- zweiten Zustand, in der Kopfanordnung (HA, HB) die Folge zweiter logischer Werte, die zumindest eine vorgegebene Bitlänge hat, zugeführt wird zur Aufzeichnung in dem Indexbereich (242) als Indexsignal anstelle des Präambelsignals, gefolgt von einer reduzierten Anzahl von wenigstens einem Block der in dem verbleibenden Teil des Indexbereichs (242) aufgezeichneten kodierten Indexdaten.

9. Vorrichtung nach Anspruch 8, bei der das Informationssignal ein Audiosignal ist.

10. Vorrichtung nach Anspruch 8 oder 9, bei der die Anzahl von Blöcken (BLK1 bis BLK6) in den kodierten Indexdaten variabel ist.

11. Vorrichtung nach einem der Ansprüche 8, 9 oder 10, bei der die ersten logischen Werte "1"en und die zweiten logischen Werte "0"en sind, so daß das Indexsignal ein "0"-Indexsignal mit einer genügend großen Bitlänge ist, um zuverlässig detektiert werden zu können.

12. Vorrichtung nach einem der Ansprüche 8 bis 11 mit Mitteln, die der rotierenden Kopfanordnung (HA, HB) zweite Informationssignale zum Aufzeichnen in zweiten Teilen (26) der Schrägspuren (4A, 4B) zuführen, die jeweils von dem ersten Teil (23), dem Postambelbereich (241) und dem Indexbereich (242) der betreffenden Schrägspur getrennt sind.

13. Vorrichtung nach Anspruch 12, bei der die zweiten Informationssignale Videosignale sind.

14. Vorrichtung nach Anspruch 12, bei der die zweiten Informationssignale Kanäle von Audiosignalen sind.

## Revendications

1. Appareil d'enregistrement d'un signal d'information dans des parties limitées (23) de pistes inclinées successives (4A, 4B) sur un support d'enregistrement (2) au moyen d'une tête tournante (HA, HB), chaque piste (4A, 4B) comportant une zone d'indexage (242) éloignée de ladite partie limitée (23) pour enregistrer le signal d'information, l'appareil comprenant :
un moyen (60) pour traiter un signal d'information sous une forme numérique ;
un moyen (37, 32) pour appliquer le signal d'information traité à la tête tournante (HA, HB) pour l'enregistrer dans lesdites parties limitées (23) des pistes inclinées (4A, 4B) ;
un moyen (72) pour générer des données d'indexage codées qui sont constituées par une pluralité de blocs (BLK1 à BLK6),
caractérisé par :
un moyen (72) pour générer un signal d'indexage comportant plusieurs bits pour rechercher des débuts de groupes de pistes inclinées ;
un moyen (72) pour générer un signal de préambule comportant plusieurs bits dont des valeurs sont différentes de celles dudit signal d'indexage ; et
un moyen de commande (41, 42, 100, 74, 35, 37, 32) pour appliquer ledit signal de préambule et lesdites données d'indexage codées à la tête tournante (HA, HB) pour leur enregistrement séquentiel au moyen de la tête tournante dans ladite zone d'indexage (242) d'une piste inclinée (4A, 4B) et pour réduire le nombre de blocs desdites données d'indexage codées et enregistrer ledit signal d'indexage en lieu et place dudit signal de préambule en tant que repère desdits débuts de groupes de pistes inclinées afin d'établir une compatibilité.

2. Appareil selon la revendication 1, dans lequel le signal d'information est un signal audio.

3. Appareil selon la revendication 1 ou 2, dans lequel le nombre de blocs (BLK1 à BLK6) desdites données d'indexage codées est variable.

4. Appareil selon l'une quelconque des revendications précédentes, dans lequel ledit signal d'indexage comprend des "0" consécutifs et ladite partie de préambule comprend des "1" consécutifs.

5. Appareil selon l'une quelconque des revendications précédentes, comprenant un moyen pour enregistrer un second signal d'information dans chaque piste inclinée (4A, 4B), dans une partie (26) de la piste qui est différente de ladite partie limitée (23) où le signal d'information mentionné en premier est enregistré.

6. Appareil d'enregistrement selon la revendication 5, dans lequel le second signal d'information est un signal vidéo.

7. Appareil selon la revendication 5, dans lequel le second signal d'information comprend une pluralité de canaux de signaux audio.

8. Appareil d'enregistrement et/ou de reproduction de signaux d'information dans des pistes inclinées successives (4A, 4B) sur une bande d'enregistrement (2), l'appareil comprenant :
un moyen de traitement de signal d'information (60) pour convertir des signaux d'information d'entrée selon une forme numérisée dans laquelle les données d'information, pour une longueur temporelle prédéterminée, sont groupées en une pluralité de blocs de données ;
un moyen de têtes tournantes (HA, HB) connecté au moyen de signal d'information (6) pour enregistrer et/ou reproduire les blocs de données groupés contenant un signal d'information numérisé pour ladite longueur temporelle prédéterminée dans une première partie (23) d'une piste inclinée respective (4A, 4B) sur la bande (2) ;
un moyen (72) pour générer des données d'indexage codées constituées par une pluralité de blocs (BLK1 à BLK6),
caractérisé par :
un moyen (72) fonctionnant de façon sélective pour générer des premières valeurs logiques consécutives en tant que signal de postambule et en tant que signal de préambule pour lesdites données d'indexage codées et pour générer des secondes valeurs logiques consécutives d'au moins une longueur binaire prédéterminée en tant que signal d'indexage identifiant le début d'un groupe respectif des pistes inclinées (4A, 4B) ;
un moyen (41, 42, 100, 74) sensible à une rotation dudit moyen de têtes tournantes (HA, HB) pour produire un signal de zone d'indexage (GS) en correspondance avec le balayage au moyen du moyen de têtes tournantes (HA, HB) d'une zone d'indexage (242) d'une piste inclinée respective (4A, 4B) qui est espacée de ladite première partie (23) de la piste respective par une zone de postambule d'intervention (241) ; et
un moyen de commande (35) sensible audit signal de zone d'indexage (GS) et présentant un premier état dans lequel lesdites premières valeurs logiques consécutives sont appliquées au moyen de têtes tournantes (HA, HB) pour effectuer un enregistrement en tant que signal de postambule dans ladite zone de postambule (241) ainsi que dans une partie contiguë de ladite zone d'indexage (242) en tant que signal de préambule puis une pluralité desdits blocs (BLK1 à BLK6) des données d'indexage codées sont appliqués au moyen de têtes tournantes pour effectuer un enregistrement dans un reste de ladite zone d'indexage (242), le moyen de commande (35) présentant en outre un second état dans lequel lesdites secondes valeurs logiques consécutives d'au moins ladite longueur binaire prédéterminée sont appliquées au moyen de têtes tournantes pour effectuer un enregistrement dans ladite zone d'indexage (242) en tant que dit signal d'indexage en lieu et place dudit signal de préambule et sont suivies d'un nombre réduit d'au moins un bloc de données d'indexage codées enregistrées dans ledit reste de la zone d'indexage (242).

9. Appareil selon la revendication 8, dans lequel les signaux d'information d'entrée sont des signaux audio.

10. Appareil selon la revendication 8 ou 9, dans lequel le nombre desdits blocs (BLK1 à BLK6) qui forment lesdites données d'indexage codées est variable.

11. Appareil selon la revendication 8, 9 ou 10, dans lequel lesdites premières valeurs logiques sont des "1" et lesdites secondes valeurs logiques sont des "0" de telle sorte que ledit signal d'indexage soit un signal d'indexage "0" présentant une longueur binaire suffisante pour pouvoir être détecté de façon fiable.

12. Appareil selon l'une quelconque des revendications 8 à 11, comprenant un moyen pour appliquer au moyen de têtes tournantes (HA, HB) des seconds signaux d'information pour effectuer un enregistrement dans des secondes parties (26) des pistes inclinées (4A, 4B) qui sont chacune espacées de ladite première partie (23), d'une zone de postambule (241) et d'une zone d'indexage (242) de la piste inclinée respective.

13. Appareil selon la revendication 12, dans lequel les seconds signaux d'information sont des signaux vidéo.

14. Appareil selon la revendication 13, dans lequel les seconds signaux d'information sont des canaux de signaux audio.
